# FASCICULE DE BREVET EUROPEEN

(11) **EP 1 553 822 B1**
(45) Date de publication et mention de la délivrance du brevet: **08.03.2006**
(21) Numéro de dépôt: 03809345.6
(22) Date de dépôt: 21.10.2003
(51) Int. Cl.: A01K 11/00

(54) **BOUCLE AVEC PRELEVEMENT DE SANG POUR ANALYSE ADN**
RING MIT BLUTENTNAHME FÜR DIE DNA-ANALYSE
RING WITH BLOOD SAMPLING FOR DNA ANALYSIS

(30) Priorité: 22.10.2002 FR 0213134
(43) Date de publication de la demande: 20.07.2005
(73) Titulaire: CHEVILLOT SA, F-81011 Albi Cédex 9 (FR)
(72) Inventeur: TEYCHENE, Bruno, F-81430 Mouzieys Teulet (FR)
(74) Mandataire: Ravina, Bernard
(86) Numéro de dépôt international: PCT/EP2003/050740
(87) Numéro de publication internationale: WO 2004/036985

(56) Documents cités:
- WO-A-01/72117
- WO-A-01/87054
- WO-A-99/61882
- DE-A- 19 740 429
- NL-A- 9 002 639
- US-A- 6 095 915

## Description

La présente invention concerne le domaine du marquage et de l'identification des animaux de rente.

Il est connu, le marquage des animaux étant obligatoire au moyen de boucles fixées aux oreilles, de prélever de la matière organique qui peut être récupérée et stockée pour identifier ultérieurement l'animal, notamment par son ADN.

Les boucles connues comprennent une étiquette avec tête creuse, dite étiquette femelle et une étiquette avec un poinçon, dite étiquette mâle, le poinçon pénétrant dans la tête creuse après avoir traversé la paroi de l'oreille de l'animal sous l'action d'une pince dont un mors reçoit l'étiquette femelle et l'autre l'étiquette mâle.

Les brevets antérieurs, notamment n° WO 99/61882, DE19740429 et FR 0104570 sont basés sur un prélèvement de matière biologique par un moyen emporte pièce porté par un des mors de la pince, ledit moyen étant séparé de la pince pour le stockage.

Cette technique connue présente l'avantage d'effectuer le prélèvement en même temps que la pose de l'étiquette et de permettre l'enlèvement de la matière biologique prélevée après pose de l'étiquette et retrait de la pince.

Le brevet WO 01/87054 décrit un dispositif de prélèvement d'échantillon pour l'identification du bétail qui n'est plus lié à la pince mais qui est fixé sur l'une des étiquettes de la boucle.

Plus précisément, ce dispositif de prélèvement est une bande de matériau absorbant collée sur l'étiquette portant le poinçon et autour de celui-ci.

Ce brevet met en oeuvre la capacité d'absorption du matériau pour prélever du sang et/ou des cellules ou des muqueuses de l'animal.

Selon ce brevet, le prélèvement s'effectue en même temps que la pose de l'étiquette, mais l'enlèvement du porte échantillon constitué par la bande de matériau absorbant doit s'effectuer après enlèvement de la pince par une intervention de décollement de la bande, alors que l'étiquette est fixée à l'animal, ce qui n'est pas facile.

De plus, la bande absorbante étant collée à la base du poinçon mâle est éloignée du point de percement de l'oreille et le prélèvement réalisé, peut être insuffisant quantitativement ou même nul.

Il est apparu cependant que le prélèvement d'une goutte de sang, tel qu'utilisé avant l'invention du brevet WO 01/87054, dans le test néonatal, par un matériau absorbant pouvait présenter de l'intérêt, dans le domaine concerné, sous réserve de correspondre à des conditions d'emploi adaptées au cas particulier de la pose des étiquettes sur des oreilles d'animaux qui pour être optimale, nécessitent que l'opération soit instantanée et non en plusieurs temps.

C'est un des buts de la présente invention auquel parvient l'invention par une boucle permettant le prélèvement et sa pince spécifique.

A cet effet , la boucle selon l'invention de marquage et d'identification des animaux comprenant une étiquette mâle avec un poinçon qui troue l'oreille de l'animal et pénètre, après avoir traversé l'oreille, dans une tête creuse d'une étiquette femelle sous l'action d'une pince se caractérise en ce que l'une des deux étiquettes mâle ou femelle est dotée d'un moyen latéral à l'étiquette et séparable de celle-ci de prélèvement de matériau biologique extrait de l'oreille de l'animal lorsqu'elle est traversée par le poinçon, le dit moyen de prélèvement comportant un matériau absorbant, que le dit moyen est relié à l'une des mors de la pince, et que l'ouverture des mors de la pince et ou son enlèvement de l'oreille de l'animal sépare le moyen de prélèvement de l'étiquette concernée.

Suivant une autre disposition, la boucle est caractérisée en ce que le moyen de prélèvement est rattaché à l'étiquette femelle.

Suivant une autre disposition la boucle est caractérisée en ce que le moyen de prélèvement comprend une attache à fixer sur l'un des mors de la pince et un matériau absorbant.

La boucle également se caractérise en ce que le matériau absorbant est disposé transversalement au sens de passage du poinçon mâle à travers l'oreille et à l'axe de la tête creuse de l'étiquette femelle.

La boucle se caractérise également en ce que le matériau absorbant est une bande de prélèvement dont une extrémité est fixée sur l'attache et dont l'autre libre est transversale au sens de passage du poinçon à travers l'oreille de l'animal.

La boucle se caractérise également en ce que le matériau absorbant est monté par une de ses extrémités transversalement à l'intérieur de la tête creuse de l'étiquette femelle et par son autre extrémité à une attache à fixer au mors de la pince.

La pince permettant la pose de la boucle selon l'invention dont elle est Indissociable se caractérise en ce que l'un des mors de la pince est doté d'un moyen de fixation de l'attache à laquelle est relié le matériau absorbant.

D'autres avantages et caractéristiques de l'invention apparaîtrons à la lecture de la description ci après de formes de réalisation de l'invention données à titre d'exemple de non limitatifs et illustrée par les dessins joints dans lesquels ;
- les figures 1 à 3 représentent une forme de réalisation d'une étiquette de boucle selon l'invention,
- les figures 4 - 5 représentent une autre forme de réalisation d'étiquette de boucle selon l'invention,
- les figures 6 et 7 représentent deux formes de réalisations de la pince selon l'invention pour la pose des boucles selon l'invention.
- les figures 8, 9 et 10 montrent une autre forme de réalisation de l'étiquette de boucle selon l'invention
- les figures 11 et 12 montrent une autre forme de réalisation de l'étiquette de boucle selon l'invention

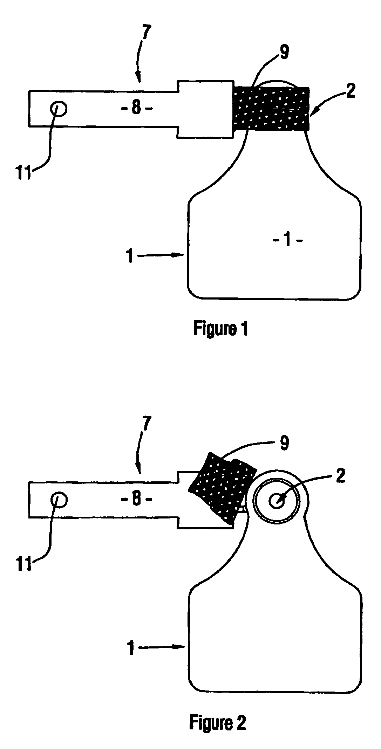

Aux dessins annexes, dans les figures 1 à 5 est représentée une étiquette 1, dite femelle, d'une boucle de type connu comprenant une étiquette mâle non représentée avec un doigt conformé en un poinçon qui perce la paroi de l'oreille de l'animal et qui se loge dans la tête creuse de l'étiquette femelle.

Le repère 1 indique l'étiquette qui porte des marquages conventionnels.

Le repère 2 indique la tête creuse dans laquelle se loge de manière irréversible le poinçon de l'étiquette mâle (non représenté).

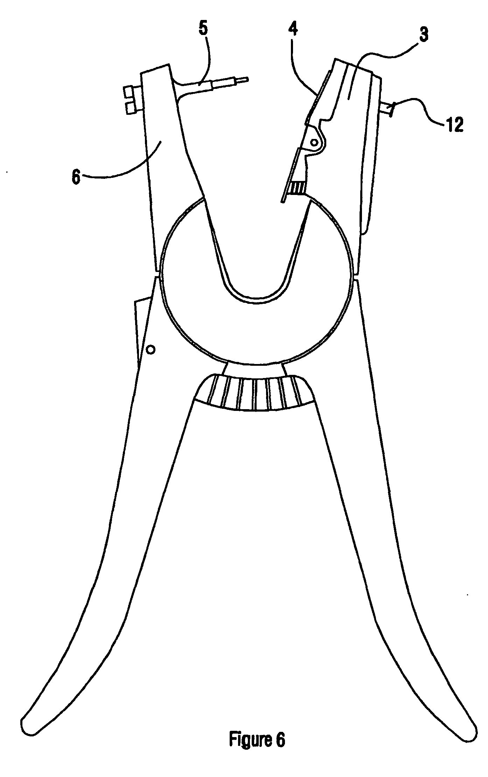

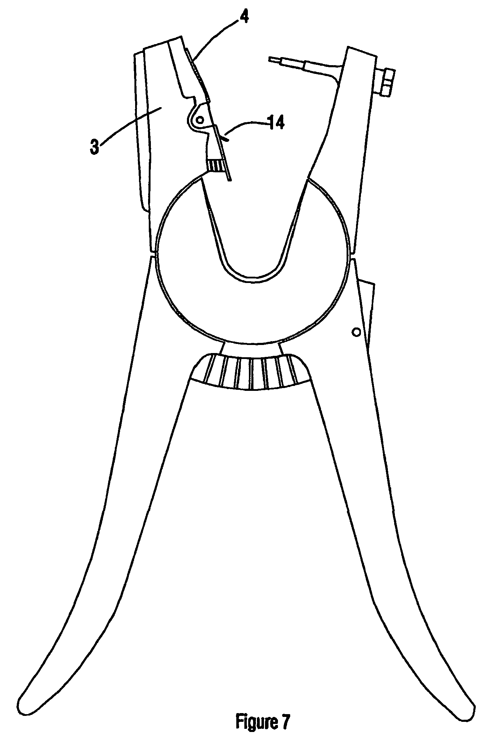

La tête creuse de l'étiquette femelle est montée sur le mors 3 de la pince (figure 6 - 7) et y est maintenue par un levier 4.

Le poinçon de l'étiquette femelle se monte sur la tige pointeau 5 du mors 6 antagoniste du mors 3.

Le rapprochement des mors, la paroi de l'oreille étant entre eux, réalise le perçage de celle-ci et la pénétration irréversible du poinçon mâle dans la tête femelle, la boucle est fixée à l'oreille en une seule opération.

L'ouverture de la pince libère l'oreille de l'animal équipé de la boucle.

Selon l'invention, l'une quelconque des deux étiquettes mâle ou femelle est dotée d'un moyen de prélèvement 7 qui est fixé à l'étiquette de manière à pouvoir en être séparé lorsque la boucle est fixée à l'oreille de l'animal et que la pince est écartée de l'oreille.

Le moyen de prélèvement d'échantillon latéral à l'étiquette et séparable de celle-ci, comprend une attache 8 à laquelle est fixé ou qui porte un matériau absorbant 9.

L'attache 8 est reliée à l'un des mors 3/6 de la pince de pose de l'étiquette.

Le matériau absorbant est disposé transversalement au sens de passage du poinçon de l'étiquette mâle vers et dans la tête creuse de l'étiquette femelle, en sorte que lorsque la paroi de l'oreille est traversée il reçoive le sang ou le matériau biologique détaché de l'oreille.

Le moyen de prélèvement est déposé en partie sur l'étiquette et en partie à l'extérieur de l'étiquette.

La fixation du moyen de prélèvement 7, constitué par l'attache 8 et le matériau absorbant, sur l'étiquette est réalisé de manière non définitive en sorte que lorsque la boucle est posée par ouverture de la pince à laquelle l'attache 8 est fixée, le moyen de prélèvement 7 soit séparé de l'étiquette.

Cette séparation est facilitée par le retrait et l'enlèvement de la pince de l'oreille de l'animal.

Préférentiellement, le moyen de prélèvement est porté par l'étiquette à tête femelle.

Le matériau absorbant, est disposé transversalement à l'axe de la tête femelle, soit au débouché de son orifice, soit dans son canal borgne.

Il est particulièrement avantageux que la position du matériau absorbant soit postérieure à la paroi de l'oreille ce qui permet d'assurer qu'il sera au contact du matériau biologique porté par le poinçon.

Les figures 1 à 3 représentent une forme particulière de réalisation de l'invention.

Les figures 1/2 représentent l'étiquette femelle vu du côté du débouché de la tête 2.

L'attache 8 est constituée par une bande d'un matériau synthétique ou autre fixé sur le bord de l'étiquette au niveau de la tête femelle et radialement à celle-ci.

La fixation de l'attache s'effectue de manière à autoriser la rupture de la liaison avec l'étiquette sous l'effet de la traction exercée par l'utilisateur qui, après ouverture de la pince, la retire de l'oreille de l'animal.

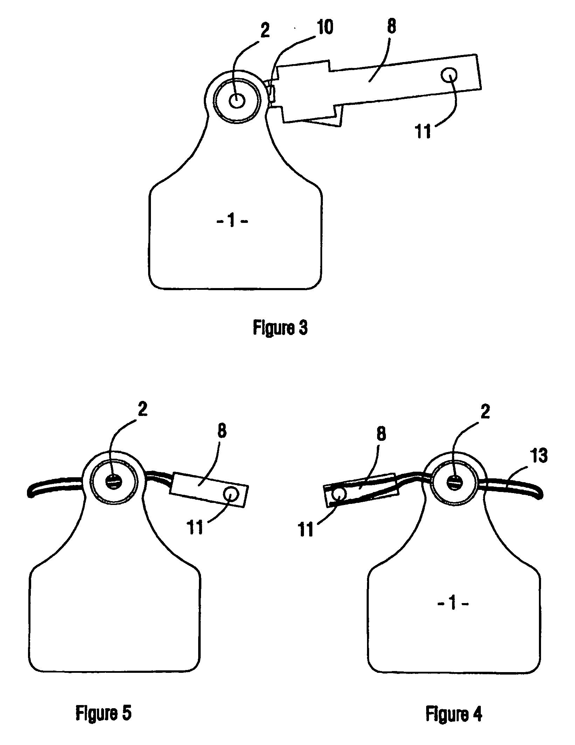

A cet effet, une ligne de rupture 10, par exemple par une réduction d'épaisseur, est ménagée sur l'attache 8 au niveau de sa jonction avec l'étiquette connue représentée en figure 3.

Dans cette forme de réalisation, le matériau absorbant est constitué par une bande souple de tout type connu qui est fixée sur la bande de l'attache par une partie en arrière de la ligne ou zone de rupture 10 et qui est libre en avant de cette zone 10 au dessus du débouché de la tête femelle.

L'attache 8 présente un moyen de fixation sur la mâchoire 3 de la pince.

Ce moyen est un perçage 11 par lequel la bande de l'attache repliée se bloque sur un téton 12 de la mâchoire de la pince représentée en figure 6.
Dans l'exemple de réalisation de l'invention représentée aux figures 4 et 5, la tête creuse de l'étiquette femelle est dotée d'un perçage transversal suivant son diamètre dans lequel est introduit le matériau absorbant sous la forme d'une mèche 12 de section adaptée qui traverse la dite tête 2 et sort de chaque côté.

Sur un des côtés de la tête, la mèche est préférentiellement fixée à l'étiquette 1, par exemple par un point de collage 13.

Sur l'autre côté de la tête, la mèche est fixée à une attache 8 constituée d'une bande de matière synthétique ou autre dotée d'un perçage 11 qui permet la fixation de l'attache sur un crochet 14 du levier 4.

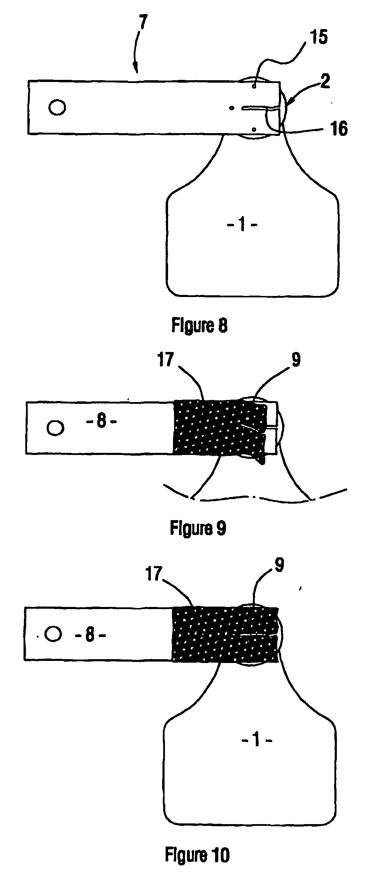

En figures 8, 9 et 10 est représentée une autre forme de réalisation de l'étiquette de boucle selon l'invention.

Dans cette forme de réalisation, la bande de matériau constituant l'attaché est fixée sur l'orifice 2 de la tête femelle en sorte d'être traversée par le poinçon de l'étiquette mâle.

La fixation de l'attache sur le pourtour de l'orifice de la tête femelle s'effectue par des points de fixation 15 venant de soudage.

Avantageusement, la partie de l'attache qui est au-dessus de l'orifice de la tête femelle est dotée d'une fente 16 de passage du poinçon. Suivant une autre disposition de l'invention, l'attache présente en retrait de sa partie qui recouvre l'orifice de la tête femelle, la dite partie étant fendue en 16, une zone 17 revêtue d'une colle pour la fixation de la bande 9 de matériau absorbant.

Cette bande 9 de matériau absorbant est collée sur la zone 17 de l'attache et s'étend jusqu'au dessus de l'orifice de la tête creuse qu'elle recouvre.

Elle peut être pourvue d'une fente de passage du poinçon correspondant à la fente 16.

La figure 10 montre la position de la bande 9 collée à une extrémité de la bande de l'attache 8 et la figure 9 montre que l'autre partie de la bande 9 de prélèvement est libre.

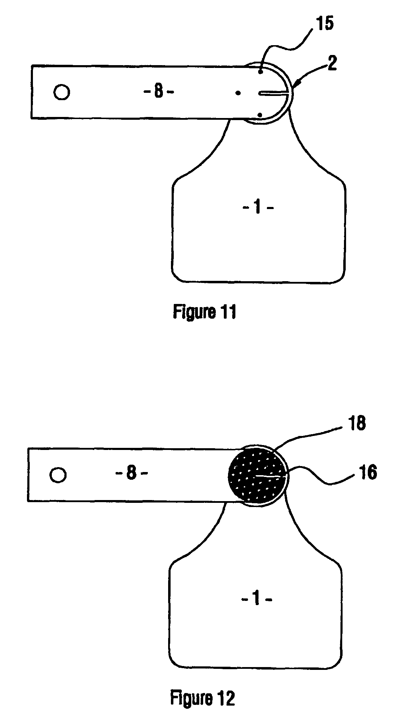

Les figures 11 et 12 montrent une autre forme de réalisation de l'invention dans laquelle la bande d'attache 8 est fixée par points 15 venant de soudure sur la périphérie de l'orifice de la tête creuse femelle.

La zone de la bande d'attache 8 que recouvre l'orifice de la tête femelle et de préférence fendue 16 pour faciliter le passage du poinçon.

La zone recouvrant la tête femelle de la bande est dotée d'une colle et le matériau absorbant 9 est constitué d'un tampon 18 de préférence circulaire collé sur cette zone.

Le matériau absorbant 9 est de préférence également fendu en 16.

Dans les formes de réalisation de l'invention représentées aux figures 8 à 12, la fixation par points 15 de la bande constituant l'attache est conçue en sorte de se rompre pour permettre après la pose sur l'oreille la séparation de l'étiquette et du moyen de prélèvement.

Avantageusement, l'étiquette mâle, l'étiquette femelle et l'attache 8 sont dotées de marquages identiques chiffrés, lettres ou code barre par exemple pour l'identification.

## Revendications

1. Boucle de marquage et d'identification des animaux comprenant une étiquette mâle avec un poinçon qui traverse l'oreille de l'animal et qui pénètre dans une tête creuse (2) d'une étiquette femelle 1 sous l'action d'une pince **caractérisée en ce que** l'une des deux étiquettes mâle ou femelle est dotée d'un moyen de prélèvement (7), latéral à l'étiquette et séparable de celle-ci, de matériau biologique extrait de la paroi de l'oreille de l'animal lorsqu'elle est traversée par le poinçon, le dit moyen de prélèvement comportant un matériau absorbant (9/13), que le dit moyen (7) est relié à l'un des mors (3) de la pince et que l'ouverture des mors de la pince et/ou son enlèvement de l'oreille de l'animal sépare le moyen de prélèvement (7) de l'étiquette (1) concemée.

2. Boucle selon la revendication 1 **caractérisée en ce que** le moyen (7) de prélèvement est rattaché à l'étiquette femelle.

3. Boucle selon la revendication 1 et l'une quelconque des revendications 2 et 3 **caractérisée en ce que** le moyen de prélèvement comprend une attache (8) à fixer sur l'un des mors de la pince et un matériau absorbant (9/13).

4. Boucle selon la revendication 1 **caractérisée en ce que** le matériau absorbant (9/13) est disposé transversalement au sens de passage du poinçon mâle à travers l'oreille et à l'axe de la tête creuse (2) de l'étiquette femelle, le matériau de prélèvement étant postérieur à la paroi de l'oreille.

5. Boucle selon la revendication 1 et les revendications 2, 3 et 4 **caractérisée en ce que** le matériau absorbant est une bande (9) de prélèvement dont une partie est fixée sur l'attache relié au mors sur l'attache et dont l'autre est transversale au sens de passage du poinçon à travers l'oreille de l'animal.

6. Boucle selon la revendication 1 et les revendications 2, 3 et 4 **caractérisée en ce que** le matériau absorbant 13 est monté par une de ses extrémités transversalement à l'intérieur de la tête creuse de l'étiquette femelle et par son autre extrémité à une attache à fixer au mors de la pince.

7. Pince permettant la pose de l'étiquette selon l'une quelconque des revendications 1 à 6 **caractérisée en** de que l'un des mors de la pince est doté d'un moyen de fixation de l'attache à laquelle est relié le matériau absorbant.

8. Boucle selon la revendication 1 et l'une quelconque des revendications précédentes **caractérisée en ce que** le matériau absorbant 9/13 est déposé transversalement à l'axe de la tête femelle.

9. Boucle selon la revendication 1 et l'une quelconque des revendications 2, 3, 4, 5 **caractérisée en ce que** l'attache (8) est fixée sur le pourtour de l'orifice de la tête femelle.

10. Boucle selon la revendication 9 **caractérisée en ce que** l'attache (8) et le moyen de prélèvement sont fendus (16) au-dessus du débouché de la tête femelle (2).

11. Boucle selon la revendication 1 et l'une quelconque des revendications précédentes **caractérisée en ce que** l'étiquette mâle, l'étiquette femelle et l'attache (8) sont dotées de signes de marquage et d'identification identiques.

## Claims

1. Ear tag for marking and identifying animals comprising a male tag panel with a punch that perforates the animal's ear and penetrates into the hollow head (2) of a female tag panel 1 under the action of a clamp, **characterised in that** one of the male or female tag panels is provided with a means (7), lateral to the tag panel and separable therefrom, for sampling biological material extracted from the ear of the animal when it is pierced by the punch, said sampling means comprising an absorbent material (9/13), and **in that** said means (7) is linked to one of the jaws of the clamp (3) and the opening of the clamp jaws and/or its removal from the animal's ear separates the sampling means (7) from the tag (1) concerned.

2. Ear tag according to claim 1, **characterised in that** the sampling means (7) is attached to the female tag panel.

3. Ear tag according to claim 1 and either of claims 2 and 3 *[sic]*, **characterised in that** the sampling means comprises an attachment (8) to be fixed on one of the jaws of the clamp and an absorbent material (9/13).

4. Ear tag according to claim 1, **characterised in that** the absorbent material (9/13) is disposed transversely to the direction of penetration of the male punch through the ear and to the axis of the hollow head (2) of the female tag panel, the sampling material being posterior to the ear wall.

5. Ear tag according to claim 1 and claims 2, 3 and 4, **characterised in that** the absorbent material is a sampling strip (9), wherein one end is fixed to the attachment linked to the clamp on the attachment and the other is transversal to the direction of penetration of the punch through the animal's ear.

6. Ear tag according to claim 1 and claims 2, 3 and 4, **characterised in that** the absorbent material 13 is connected by one of its ends transversely to the interior of the hollow head of the female tag panel and by its other end to an attachment to be fixed to the jaw of the clamp.

7. Clamp enabling the fitting of the ear tag according to any one of claims 1 to 6, **characterised in that** one of the jaws of the clamp is provided with a fixing means for the attachment to which the absorbent material is linked.

8. Ear tag according to claim 1 and any one of the preceding claims, **characterised in that** the absorbent material 9/13 is disposed transversely to the axis of the female head.

9. Ear tag according to claim 1 and any one of claims 2, 3, 4, 5, **characterised in that** the attachment (8) is fixed onto the periphery of the opening of the female head.

10. Ear tag according to claim 9, **characterised in that** the attachment (8) and the sampling means are slit (16) over the opening of the female head (2).

11. Ear tag according to claim 1 and any one of the preceding claims **characterised in that** the male tag panel, the female tag panel and the attachment (8) are provided with identical symbols for marking and identification.

## Patentansprüche

1. Zweiteilige Ohrenmarke zur Markierung und Identifizierung von Tieren, bestehend aus einem männlichen Schild mit Nadel, die das Ohr des Tieres durchsticht und mit Hilfe einer Zange in den Aufnahmekopf (2) des weiblichen Schildes (1) gedrückt wird. Eines der beiden Schilder, männlich oder weiblich, ist, seitlich am Etikett und von diesem abnehmbar, mit einer Vorrichtung zur Probenentnahme (7) ausgestattet, die beim Anbringen der Marke Gewebematerial von der Ohrwand des Tieres in dem Moment entnimmt, wenn die Nadel das Ohr durchsticht. Besagte Probenentnahmevorrichtung (7) ist an einer Backe (3) der Zange befestigt und besteht aus absorbierendem Material (9/13). Bei Öffnung der Zange und/oder ihrer Abnahme vom Ohr des Tieres wird die Probenentnahmevorrichtung (7) des betreffenden Schildes (1) entfernt.

2. Ohrenmarke nach Anspruch 1, **dadurch gekennzeichnet, dass** die Probenentnahme-Vorrichtung (7) am weiblichen Schild befestigt ist.

3. Ohrenmarke nach Anspruch 1 und nach einem der Ansprüche 2 oder 3, **dadurch gekennzeichnet, dass** die Probenentnahme-Vorrichtung einen Streifen (8) mit absorbierendem Material (9/13) besitzt, der an einer der Zangenbacken befestigt wird.

4. Ohrenmarke nach Anspruch 1, **dadurch gekennzeichnet, dass** das absorbierende Material (9/13) quer zur Durchstichrichtung durch das Ohr des Tieres und zur Achse des Aufnahmekopfes (2) im weiblichen Schild angeordnet ist, so dass die Probenentnahme hinter der Ohrwand stattfindet.

5. Ohrenmarke nach Anspruch 1 sowie Ansprüche 2, 3 und 4, **dadurch gekennzeichnet, dass** das absorbierende Material ein Probenentnahmestreifen (9) ist, dessen eine Hälfte mit dem an einer Zangenbacke befestigten Streifen verbunden ist und dessen andere Hälfte quer über der Durchstichpassage durch das Ohr des Tieres liegt.

6. Ohrenmarke nach Anspruch 1 sowie Ansprüche 2, 3 und 4, **dadurch gekennzeichnet, dass** ein Ende des absorbierenden Materials (13) quer über der Innenseite des Aufnahmekopfes des weiblichen Schildes liegt und das andere Ende mit einem Streifen verbunden ist, der an der Zangenbacke befestigt wird.

7. Zange zum Anbringen der Ohrenmarke nach einem der Ansprüche 1 bis 6, **dadurch gekennzeichnet, dass** eine der Zangenbacken mit einer Aufnahmevorrichtung für den Streifen ausgestattet ist, an dem das absorbierende Material angebracht ist.

8. Ohrenmarke nach Anspruch 1 und nach einem der voranstehenden Ansprüche, **dadurch gekennzeichnet, dass** das absorbierende Material (9/13) quer zur Achsrichtung des Aufnahmekopfes im weiblichen Schild angebracht ist.

9. Ohrenmarke nach Anspruch 1 und nach einem der Ansprüche 2, 3, 4, 5, **dadurch gekennzeichnet, dass** der Streifen (8) über der Bohrung des Aufnahmekopfes im weiblichen Schild angebracht ist.

10. Ohrenmarke nach Anspruch 9, **dadurch gekennzeichnet, dass** der Streifen (8) und die Probenentnahme-Vorrichtung einen Spalt (16) oberhalb der Einmündung des Aufnahmekopfes (2) des weiblichen Schildes besitzen.

11. Ohrenmarke nach Anspruch 1 und nach einem der voranstehenden Ansprüche, **dadurch gekennzeichnet, dass** das männliche Schild, das weibliche Schild und der Streifen (8) identische Markierungs- und Identifizierungszeichen aufweisen.
